# EUROPEAN PATENT SPECIFICATION

(11) **EP 2 147 767 B1**
(45) Date of publication and mention of the grant of the patent: **10.04.2013**
(21) Application number: 08425496.0
(22) Date of filing: 23.07.2008
(51) Int. Cl.: B65D 43/02, B29C 45/14, G09F 3/04

(54) **Method for producing a plastic label-inclusive lid using the inmoulding technique, mould for carrying out such method and lid obtained with such method**
Verfahren zur Herstellung eines Deckels mit einem Plastiketikett unter Verwendung von Inmoulding-Technologie, Formwerkzeug zum Ausführen dieses Verfahren und mittels dieses Verfahrens erhaltener Deckel
Procédé pour la fabrication d'un couvercle incluant une étiquette en plastique lors du moulage, moule pour éxécuter ce procédé et couvercle obtenu selon ce procédé

(43) Date of publication of application: 27.01.2010
(73) Proprietor: Pezzutti Aldo Srl, 33080 Fiume Veneto (PN) (IT)
(72) Inventor: Pezzutti, Massimo, 33170 Pordenone (IT)
(74) Representative: Giugni, Valter

(56) References cited:
- WO-A-02/062552
- GB-A- 2 415 406
- JP-A- 2007 144 985

## Description

### Field of the Invention

The present invention refers to a method for producing a plastic lid for containers, which is provided with its own plastic label that is included in the lid by an inmoulding technique directly when the same lid is being injection-moulded. In particular, the present invention relates to a method for applying an informative and/or decorative label onto the outer surface of a lid featuring relief patterns and inclined planes, as well as a lid obtained with such method.

### Technical Background of the Invention

Lids for containers that are provided with informative and/or decorative labels are largely known and available on the market since many years now. These labels can be applied onto the outer surface of the containers using a variety of throughout conventional processes, such as an automated process for sticking the label onto the lid after the latter has been moulded, or a process that is known under the term of "inmoulding".

Generally speaking, the inmoulding technique is based on first of all providing a label of plastic material to be appropriately printed in accordance with such requirements or preferences as dictated by the particular product or the kind of information that must be displayed. In a subsequent step, the label is placed onto the bottom of the cavity of a mould intended for moulding the lids, and held in position thereagainst. At this point, the mould is closed and the plastic material due to mould the lid is injected thereinto. When the plastic material is being so injected, the adhesion surface of the label fuses by contact with said plastic material that will have been heated to melt temperature. Thereupon, the mould is allowed to cool down and, as a result, a solidification process takes place in the plastic material, on the outer surface of which the label is thereby bonded to form a single, integral piece with the lid.

A particularly critical step in the above-described inmoulding process is the one calling for the label to be positioned inside the lid-forming mould. This step must in fact be carried out in a very accurate manner in view of ensuring that the label will first of all be perfectly centred on said bottom of the mould cavity and, as a result, will then be correspondingly positioned in a perfectly centred manner on the lid.

Still more important is the ability of holding the label in the above position as the molten plastic material is being injected thereinto. The injection of the plastic material to be moulded is in fact generally known to occur under quite severe conditions, i.e. at temperatures as high as 200°C and more, and pressures lying above 50 bar, within a period of time of less than one second. Under these conditions, it is therefore of paramount importance that a system is set up, which is effective in ensuring that the label is perfectly held in position, otherwise the final result may be an ill-centered application of the label on the outer surface of the lid, or the same label breaking up or incurring damages of a similar kind.

In the particular case that a label is to be desirably applied not only on the planar outer surface of a lid, but also along the entire peripheral border thereof, which - as already hinted hereinbefore - usually includes raised portions, inclined planes, as well as corners having more or less accentuated curvatures, the above-cited label-centering problem is further aggravated to quite considerable an extent.

In addition, it has been noticed that, in correspondence to said projecting portions, inclined planes and curved edges, the label tends to deform, thereby generating wrinkles and crimps. It can be most readily appreciated that, if the surface is not evenly planar, a perfect adhesion of the label thereto turns out as being particularly difficult to obtain and heavily affected by the afore-cited conditions, under which the molten plastic material is injected to mould the lid.

It quite often occurs that, as a result of the molten plastics being injected, the label tends to shift relative to the centre of symmetry identified by the point of injection of the plastic material, with the result that the label ends up by unacceptably projecting out at one or more points from the edge of the lid, while leaving corresponding portions of the top surface of the lid uncovered.

Two different kinds of techniques are currently available, which may be used in an attempt to do away with the above-noted problems.

The first one of such techniques consists in making use of a suction arrangement comprising vacuum micro-bores provided in the bottom of the lid moulding cavity to hold the label in position. The second technique involves creating an electrostatic attraction (adhesion) of the label against the bottom of said lid moulding cavity.

JP-A-2007 144 985 discloses a method for producing a plastic lid with a label by injection molding with the in mold label technique.

In spite of this, the problem of applying a label onto the surface of a lid, while also covering the peripheral edge thereof in such manner as to substantially prevent wrinkles and crimps from forming and, at the same time, achieving a good centering effect of the label on the lid, has not yet been solved to any effective extent.

### Summary of the Invention

The object of the present invention therefore lies in providing a method for producing a plastic lid with integrated plastic label using the afore-indicated inmoulding technique in such manner as to ensure that wrinkles, crimps and/or strains of the label, as they may occur during injection, are completely and effectively eliminated all along the peripheral edge of said lid, while at the same time achieving a good centering effect of the same label on the lid.

This aim is reached in a method, in which both the process conditions and the properties of the materials to be processed have been particularly set in view of reaching the purpose.

Accordingly, it is a first purpose of the present invention to provide a method for producing a plastic lid with integrated plastic label using the inmoulding technique, as recited in the appended claims.

It is a second purpose of the present invention to provide a lid of plastic material as obtainable with the above-cited method.

### Brief Description of the Drawings

Further features and advantages of the method and the lid according to the present invention will become apparent and be more readily understood from the description of a some embodiments given below by way of non-limiting example with reference to the accompanying drawings, in which:
- Figure 1 is a schematic plan view of a hollow mould matrix for the production of a lid according to the present invention;
- Figure 2 is a side cross-sectional view along the line II-II of the mould matrix shown in Figure 1;
- Figure 3 is a view of a detail of Figure 2, as shown in a first operating condition thereof;
- Figure 4 is a view of a detail of Figure 2, as shown in a second operating condition thereof;
- Figure 5 is a schematic plan view of a hollow mould matrix for the production of a lid according to a modified embodiment of the present invention;
- Figure 6 is a side cross-sectional view along the line VI-VI of the mould matrix shown in Figure 5;
- Figure 7 is a view of a detail of Figure 6 in a first operating condition thereof;
- Figure 8 is a view of a detail of Figure 6 in a second operating condition thereof;
- Figure 9 is a view of a detail of the cross-sectional illustration along the line IX-IX in Figure 1;
- Figure 10 is a schematic side cross-sectional view of a mould for the production of a plastic lid according to the present invention, as shown in an operative condition thereof;
- Figure 11 is an axonometric view of a lid with an illustrative label applied thereon according to the present invention;
- Figure 12 is an axonometric view of a lid with an illustrative label applied thereon according to a modified embodiment of the present invention.

### Detailed Description of the Invention

The basic idea, which the present invention is founded on, lies in modifying an "inmoulding" injection moulding process and/or the properties of the plastic materials used to mould the labels and the lids in view of finding an ideal conditions that would effectively prevent the afore-mentioned wrinkles, while allowing the same label to lie in a good centred condition on the lid.

Accordingly, extensive experimental test runs have been carried out in an attempt to identify conditions that would prove ideal in view of reaching the desired purposes.

In the course of the above-cited experiments, the assumption has afore-mentioned problems have been assumed to derive from the fact that the plastic material being injected under high pressure conditions at the fluid causes ill-balanced straining forces to act on the label along a radial direction relative to the point of injection. Moreover, when such forces come up against plane changes or changes in the radial direction, as it occurs at the level of the edges of the afore-cited raised border, said straining forces tend to distribute in a still more disorderly manner over the label. The result is exactly a formation of wrinkles in correspondence to curved corners of the border of the lid, as well as a sensible displacement and/or stretching-out of the label relative to the centre of the lid.

It has surprisingly and unexpectedly been found that, when combined with a selected label, a particular geometry of the moulding cavity enables a lid to be obtained, on which the label is applied even along and on the peripheral edges thereof without any wrinkle or distortion thereof, as well as in a substantially centred manner.

Accordingly, the method for producing a plastic lid with a plastic label applied thereon comprises the steps of:
a) providing a mould for the production of a lid of plastic material using the inmoulding technique, wherein such mould comprises a hollow mould matrix provided with a peripheral border including an annular planar surface lying substantially parallel to a planar surface of the bottom of the hollow mould matrix and joining the latter via an inclined plane having an angle α situated anywhere between 0° and 50°, with a difference in level between said two surfaces lying anywhere between 0 and 4 mm, said mould matrix having also one or several rounded corners, the outside extension radius of which ranges from 10 to 100 mm;
b) providing a label of cast stratified plastic material having a thickness of less than 90 µm and a planar extension such as to enable it to protrude by 0.5 to 2.0 mm from said peripheral border of said hollow mould matrix of said lid-forming mould;
c) placing said label onto the bottom of said hollow mould matrix;
d) holding said label in position on the bottom of said hollow mould matrix;
e) coupling said hollow mould matrix with a corresponding opposite mould punch to thereby close said hollow mould matrix so as to obtain a moulding cavity for forming a plastic lid;
f) injecting a polymer in the fluid state thereof into said moulding cavity so as to fill said cavity and cause the contact surface of said label to fuse therewith in order to obtain a single integral piece, while keeping at the same time said hollow mould matrix and said mould punch closed together at such temperature as to enable the injected polymer to solidify in the state in which it is bonded to said label.

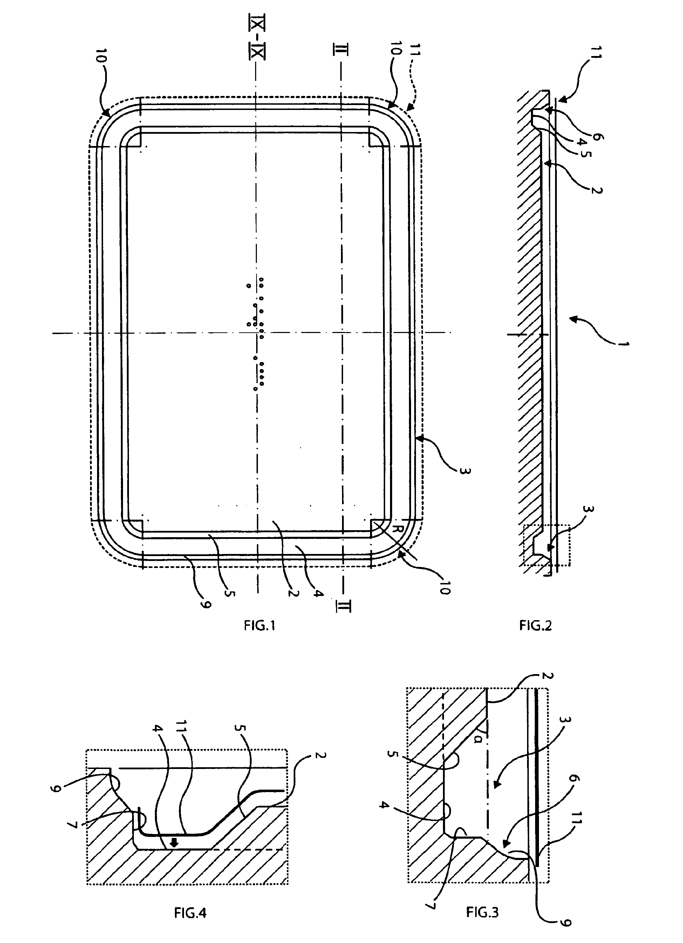

The step a) of providing a mould, as best represented in Figures 1 through to 4, includes providing a mould of a conventional kind for carrying out a moulding process according to the inmoulding technique, wherein said mould is **characterized in that** the hollow moulding matrix thereof is shaped in a particular manner.

It has in fact been found that selecting a special shape for the hollow mould matrix along enables, when combined with other technical characteristics, surprising results to be obtained.

In particular, in the above-cited Figures 1 through to 4, the reference numeral 1 is used to generally indicate a hollow matrix for moulding plastic lids, with the related label, using the inmoulding forming technique. This hollow mould matrix 1 comprises a bottom surface 2 and a peripheral border 3. The bottom surface 2 is substantially planar and can be given any shape as may be dictated by the requirements, which the end product is due to comply with, such as for instance a generally rectangular shape as shown in Figure 1. The peripheral border 3 comprises a first annular planar surface 4 extending substantially parallel to the surface defined by the bottom 2 and joining to said bottom surface 2 via an inclined plane 5. Preferably, the peripheral border also comprises a second surface 6 connecting to said first surface 4, and generally perpendicular thereto, so as to delimit said peripheral border 3 outwards by acting as a kind of side wall.

Advantageously, the bottom surface 2 and the first surface 4 of the peripheral border 3 lie on two different planes extending parallel to each other at different levels, wherein the difference in height of said two surfaces relative to each other is situated anywhere between 1 and 4 mm, more preferably at approx. 3.5 mm.

Moreover, the inclined plane 5 is preferably oriented towards the peripheral border 3 or, in other words, the bottom 2 turns out as being offset relative to said first surface 4 and the inclination relative to the same bottom lies between 10° and 50°, preferably at 45°.

The second surface 6 may in turn include a first portion 7, which is directly connecting to said first surface 4, and which is followed by a second portion 9 extending with a slightly outward flaring pattern.

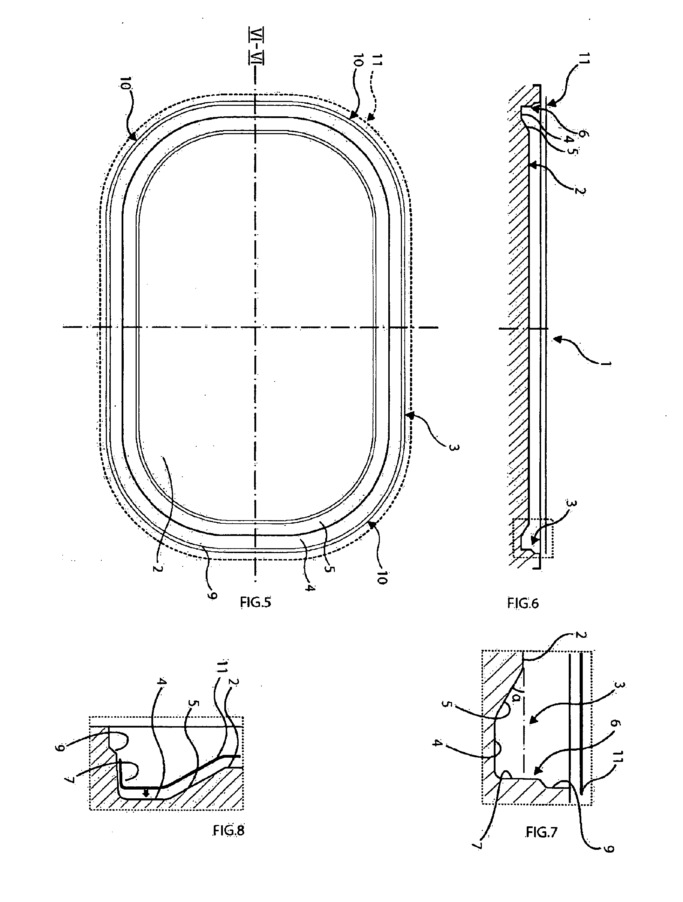

In addition, the peripheral border 3 comprises four rounded corners 10, whose radius of curvature R is situated anywhere between 10 and 60 mm, more preferably is of approx. 17 mm as represented in Figure 1. As an alternative option, represented in Figures 5 through to 8 there is a hollow mould matrix 1 similar to the above-described one, so that the same reference numerals are used in these Figures to indicate similar items, with the difference, however, that the rounded corners 10 have in this case a radius of curvature of approx. 51.5 mm, while the second portion 9 extends with a substantially perpendicular pattern relative to the surface of the bottom 2.

The step b) of providing a label is preferably carried out by using a label formed of a polymeric film being so sized as to be able to substantially cover the outer surface of a lid or, more preferably, to additionally cover also the outer peripheral border of said lid. In particular, the label is formed of a stratified polypropylene film in cast form (film extruded through a flat die and then allowed to cool on rollers) having a thickness situated anywhere between 50 and 90 µm.

Furthermore, the label may be prepared separately in accordance with particular requirements or preferences. For instance, it may be printed with decorations, wordings, representations even in a variety of specially desired colours.

Preferably, as represented in Figures 1 and 3, the label 11 is so sized as to have a planar extension in excess of the boundaries of the peripheral border 3 of the hollow mould matrix 1 and, as a result, even of the resulting lid. In particular, the label extends so as to protrude from the first surface 4 of the peripheral border 3 by approx. 0.5 to 2 mm, preferably 1 mm.

The step c) of placing the label onto the bottom of the hollow mould matrix may be carried out in accordance with throughout conventional methods. For instance, the label may be picked up from a loading station located separately from the actual injection moulding apparatus, and then conveyed into its due position inside the moulding chamber with the help of automated and/or robotized pneumatic means governed by an appropriate control unit.

For the label to be able to be correctly positioned, use can be made of locating templates, as well as adjustment fittings such as eccentric pins or ring nuts capable of being properly set at the loading station for a correct centering on the bottom of the moulding cavity.

In general, the duly aligned labels are prearranged in upright stacks stored in a proper structure called magazine, which is installed in a loading station situated upstream to or at the foot of the injection moulding press. Such magazine includes adjustable positioning means adapted to hold and position the label involved in accordance with pre-set mechanical references. Each magazine is such as to allow for micro-adjustments on the two axes (X-Y), as well as on the angular orientation (α), so as to enable possibly required fine adjustments to be carried out in view of a most correct centering of the label(s) in the mould.

A handling apparatus provided with suction cups arranged to pick up the labels, as well as with proper pick-up means provided to unload the moulded products. With the aid of the suction cups, it simultaneously picks up a label from each one of the stacks pre-arranged in the magazine in a number equal to the number of hollow matrices of the injection mould. The handling apparatus is further linked to a robot (typically an electromechanical apparatus capable of performing a number of properly programmed motions along the spatial axes X-Y-Z-R), which transfers it into the area located between the two mould halves, i.e. the hollow matrix and the corresponding punch, which are in the open state thereof at this point.

Thereupon, the handling apparatus is displaced so that the pick-up means thereof are able to pick up the finished products from the matrix of the mould as soon as the latter opens up at the end of a moulding cycle. Then, the handling apparatus sets itself so as to be able to bring the labels exactly in front of corresponding matrices so that - as already noted hereinbefore - they protrude by 0.5 to 2 mm from the contour thereof. Subsequently, the handling apparatus moves forward to thereby lay them down properly onto the bottom 2. At the same time, the handling apparatus, which is provided with appropriate electric means, transfers an electrostatic charge to the label, thereby allowing them to securely adhere against said bottom 2, as illustrated in the details shown in Figures 4 and 8, and completing also the step d) of holding the label firmly in position, so that the step of injection-moulding the plastic material in its fluid state can be carried out in a safe manner.

Preferably, the step d) of holding the label firmly in position is carried out by applying an electrostatic charge to the label in such manner as to ensure that the label has an electric potential of anywhere between 8 and 30 kilovolt.

Alternatively, the step d) of holding the label firmly in position is carried out by applying a suction effect to the bottom of the moulding cavity, on which - as already explained hereinbefore - the label is positioned.

At this point, the handling apparatus can be retracted from the mould, so that the latter can be closed, and be caused to transfer to the unloading station for the finished products to be duly laid down and stacked.

The process ends with the handling apparatus being returned to the loading station for picking up labels and repeating the above-cited steps cyclically.

The step e) of closing the mould occurs in a fully conventional manner, wherein hydraulic means are generally used to perform the required mechanical operations aimed at causing the two mould halves delimiting the moulding cavity to move against each other.

The step f) of injecting a polymer into the moulding cavity is carried out in a conventional manner with the help of usual processes and equipments. In general, this step includes melting the polymer at a temperature of more than 200°C and injecting it into the mould at a temperature lying anywhere between 250° and 320°C and a pressure of less than 175 bar. As a result of the injection, the duration of which does not generally exceed one second, the pressure within the filled mould is brought to a value ranging from 60 bar to 90 bar for a time as considered necessary for the injected polymer to set. Anyway, it is well within the abilities of those skilled in the art, i.e. machinists, to programme the moulding apparatus in view of enabling it to perform a correct moulding operation, through proper variations in process pressure, temperature and timing so as to adapt the process termination conditions to the obtainment of the desired characteristics of the end product.

Finally, holding the hollow mould matrix and the mould punch closed at such conditioned temperature as to enable the injected polymer melt to set and the moulded lid to stabilize in the definitive form thereof, is done in a fully conventional manner by for instance causing a cooling medium to flow through the walls delimiting the moulding cavity so as to condition he latter at a temperature ranging from 5°C to 30°C.

At this point, the moulding cavity can be opened and the produced article, can be removed therefrom in accordance with usual methods, such as for instance with the use of mechanical ejectors, and the moulding apparatus (the mould) becomes in this way ready for a new moulding cycle as the above-described one.

According to a modified embodiment of the present invention, the step f) of injecting a polymer may be carried out in such manner as to have relief and/or grooved patterns formed on the outer surface of the bottom of the lid. In particular, such relief and/or grooved patterns are obtained by providing the bottom of the moulding cavity with grooves and/or relieves that are complementary to the grooves and/or relieves due to desirably be replicated on the lid. Preferably, this is done in such manner as to have the above-cited patterns solely appearing on the outer surface of the lid, while leaving the inner surface thereof substantially flat. To this purpose, the mould punch due to close onto the mould matrix, i.e. the mould member that is provided with the gate through which the polymer melt is injected, has a preferably smooth top surface.

The grooves may have a depth varying within a range of 1 mm, wherein use is made of a bottom of the moulding cavity provided with corresponding (specular) relieves. Preferably, the radius of curvature of each such groove is greater than 0.5 mm, more preferably it is situated anywhere between 1 mm and 50 mm. In particular, the grooves may be such as to three-dimensionally represent (in a bas-relief manner) a portion or even the entire image of the product contained in the container due to be covered by the inventive lid. For example, in the case that the lid is used to cover an ice-cream container, the grooves may be such as to delineate the shape of an ice-cream ball with a garnish (crushed biscuits and nuts, chocolate chips, fruit pieces). Furthermore, portions of surfaces may be enlarged and specially highlighted by properly managing different roughness degrees of the outer side of the lid, to be obtained through the use of different finishing techniques known as such in the art, such as photoengraving, sandblasting, spark erosion, and the like.

It should be noticed that, when using the above-described method with the selected shapes, contours and sizes, the label can also be applied onto surfaces that have been finished or machined as described above, without any such drawback as tears, discontinuities or noticeable aesthetical defects of the graphic effect represented on the same label showing up, actually.

As in the afore-considered case of the grooves, also the relieves may be of any shape and size in due correlation and proportion with the size of the lid. Generally speaking, the relieves are in a height situated within a range of 1 mm, and preferably lying anywhere between 0.5 mm to 0.8 mm.

According to a particularly preferred embodiment, the lid with label of the present invention comprises relieves defining the Braille code. The Braille code is largely known as being a method and system of written communication for the blind, in which letters are represented by raised dots. A matrix of six positions of the dots arranged on three lines and two columns is filled with the relieves at pre-set positions so as to identify pre-determined characters.

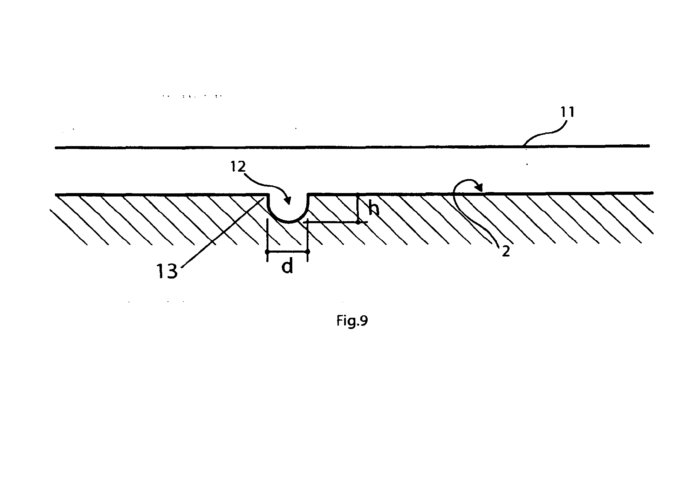

For a Braille code to be created on the outer surface of a lid, on which a label is applied using the method described just above, a solution has been devised consisting in providing the bottom of a moulding cavity with blind holes 12 (Figures 1 and 9) having preferably a round shape and diameters (d) comprised between 0.5 mm and 2 mm, preferably of 1 mm, and a depth (h) comprised between 0.5 mm and 1 mm. These blind holes 12 are generally dome-shaped with a diameter d of approx. 1 mm by a height h of approx. 1 mm.

In particular, it has been found that the boundary edge between the planar surface of the bottom of the hollow mould matrix and the side wall of the blind hole must form a sharp-edged corner 13, as shown by the corresponding detail in Figure 9. In fact, by adopting this particular measure, during the above-described injection process the label is perforated by the polymer melt in a clean-cut manner, without burrs and allowed to firmly adhere against said edge all along it. The practical result is that the label is interrupted in correspondence to the dots, without suffering any strain, tear, laceration or distortion in general. In addition, while the interruptions of the label are barely perceptible to the naked eye, any possible image, wording and/or drawings extending thereover or therearound fail to be affected by such interruptions altogether. The sharp edge 13, as this is shown in Figure 9, may preferably have an interior angle of less than 120°; more preferably, such angle is of 90°.

It can therefore be most readily appreciated that, in spite of the presence of such minute relieves of the Braille code in association with the raised peripheral border relative to the bottom of the lid, the distortions that usually occur when a lid is injection-moulded with its own label using a prior-art inmoulding process are fully avoided when using the inmoulding process according to the present invention.

The above-noted advantages exactly derive from the combination of particular geometries of the mould matrix with particular characteristics of the label when carrying out the method for applying a plastic label on to a plastic lid, as described hereinbefore.

Irrespective of the particular embodiment that may be selected for carrying out the method according to the present invention, the moulding cycle ends with an ejection step, in which the finished product, i.e. the lid with label, is removed from the mould by means of lifters or ejectors controlled in a fully conventional manner.

A further object of the present invention is a mould for producing plastic lids with a plastic label bonded thereto by an inmoulding process.

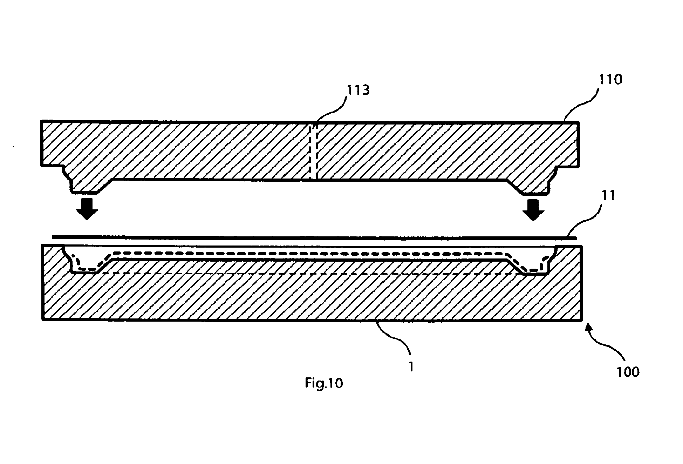

As shown in Figure 10, the mould 100 comprises a concave matrix and a punch 110 for closing the same matrix, so as to form a moulding cavity thereinside, and is provided with a nozzle 113 for the injection of plastic material in the fluid, **characterized in that** said concave matrix corresponds to the one that has been described hereinbefore with reference to Figures 1 through to 9, so that no further description shall be given here, and the punch complementarily replicates the shape of said matrix.

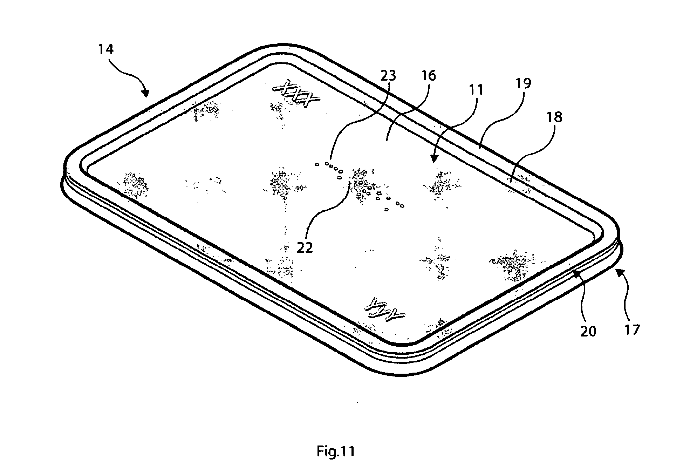

Figure 11 illustrates a lid 14 that can be obtained with the method explained and described afore.

In particular, the lid 14 includes a label 11 that has been applied thereonto by means of the above-cited method in such manner as to substantially cover the entire surface of the bottom 16 of the lid, as well as the peripheral border 17 thereof.

The peripheral border 17 comprises an inner portion 18, an intermediate portion 19 and an outer portion 20. The inner portion 18 is inclined relative to the bottom 16 by an interior angle α that may vary between 0° and 50°, preferably between 30° and 45°, so as to obtain a difference in height situated between 0 mm and 4 mm. The intermediate portion 19 is substantially planar and parallel to the bottom 16, whereas the outer portion 20 may be generally perpendicular relative to the plane identified by the bottom 16, or it may be slightly diverging relative to the centre of the lid 14.

As exhaustively described hereinbefore, prior to being applied the label is set and arranged so as to protrude from the peripheral border 17 of the lid 14 by an extent varying from 0.5 mm to 2.0 mm, depending on the typology and the size of the lid, and related border, that has to be produced. In all cases, once applied the label 11 may extend to completely cover the border 17 up to the outer portion 20 thereof, or up to just the intermediate portion 19 or inner portion 18 thereof. In particular, furthermore, said bottom includes an area 22 that is provided with minute raised portions or relieves 23 defining characters in the Braille code. Preferably, such relieves 23 exactly replicate the shape of the blind holes 12 described with reference to Figure 9, so that they are generally dome-shaped with a diameter of approx. 1 mm by a height of approx. 1 mm. Advantageously, these relieves join with the bottom via a sharp edge at preferably 90°.

In addition, the border 17 comprises rounded corners 21 that may have a radius of up to 100 mm, and preferably comprised between 10 mm and 60 mm.

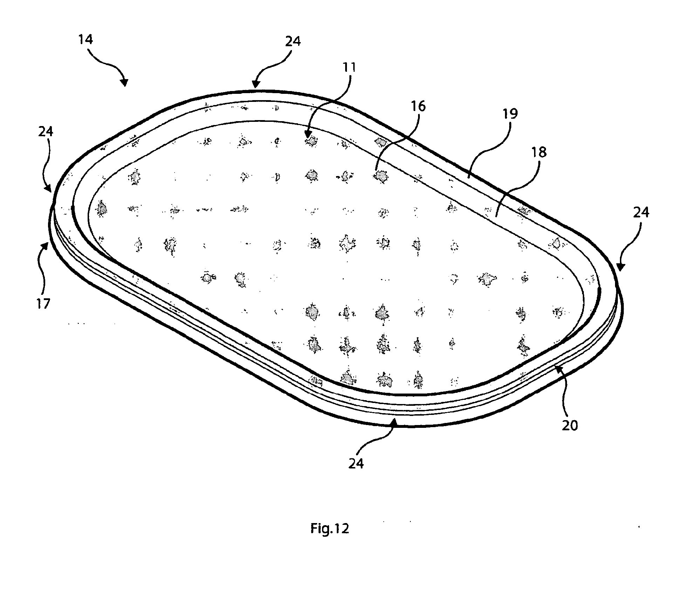

In Figure 12, according to an exemplary modified embodiment, the lid 14 includes a label 11 applied thereto so as to cover the bottom 16 and the peripheral border 17 up to the level of the outer portion 20 thereof. Preferably, the bottom 16 of the lid has a thickness of approx. 1 mm and the corners 24 have a radius of curvature of 51.5 mm. Such lid is produced with the use of a matrix similar to the one that has been described with reference to Figures 5 through to 8.

As described hereinbefore, the label 11 is formed of a polymeric film, preferably a stratified, cast-type polypropylene, polyethylene, polystyrene or polyethylene terephthalate film, having a thickness situated anywhere between 50 and 90 µm. In this connection, it is to be noticed that selecting a particular type of thickness of the polymeric film for the label allows for an ideal adaptability to the processing conditions, thereby contributing to the effective avoidance of the afore-cited problems.

The method for applying a plastic label on a plastic lid according to the present invention is therefore fully effective in allowing the afore-cited problems due to the occurrence of tears, strains and distortions at the level of the peripheral border of the lid, especially when said border includes non-planar portions and corners with even quite narrow curvature radiuses in the order of 10 mm, to be prevented.

At the same time, the possibility is given for the label to be applied in an ideally centred manner on the outer surface of the lid, without any strain or distortion of possible images or wording in correspondence to relieves or portions that are not planar relative to the bottom.

In addition, it is possible for a Braille code for the blind to be provided without affecting the picture or representation on the label to any appreciable extent, and without even causing such defects as tears and detachments in correspondence to the relieves of the Braille code to occur.

The lid according to the present invention can be used in connection with any kind of container, which a plastic lid can be applied to, actually. For example, these may be containers for fresh or deep-frozen food produced in general, such as tubs for ice cream, yoghurt, cheese, vegetables. In an alternative application, these containers may be used to contain drugs, ironmongery, household articles.

Further different embodiments of the present invention are within the abilities of those skilled in the art, but fall anyway within the scope of the present invention as defined by the appended claims.

For example, the method may be used to produce labels having a support of a rigid or flexible plastic material of the same type as the above-described lid, having a first face, which a plastic film such as the afore-described label is applied onto, and a second face that is provided with a glue or a bi-adhesive allowing the label to be bonded to containers or surfaces of various kinds. In other words, the method as it has been just described can be carried out to produce - using the inmoulding technique - small labels on a plastic support having relieves and/or grooves, such as the ones that have been defined hereinbefore, on a face thereof, and an adhesive laid over the opposite planar face thereof, so as to enable said labels to be applied to lids, containers or other surfaces on which it is necessary or possible for a portion carrying information of a various nature to be provided.

This particular embodiment may be put into practice by providing, on the bottom of the afore-cited concave matrix, a block insert, which may for instance be machined to feature the afore-described shapes, relieves and/or grooves, and which is replaceable with similar block inserts featuring other patterns, as well as modifications thereof.

This particular advantage enables a single and same mould or moulding apparatus to be used to produce, using the inmoulding technique, plastic lids carrying different labels in quite versatile and low-cost a manner by simply replacing the block inserts in the mould accordingly.

The inmoulding process, as described afore, can also be used and carried out to apply labels onto the bottom and also the side walls of the same containers.

## Claims

1. Method for producing a plastic lid with a label, comprising the steps of:
a) providing a mould (100) for the production of a lid of plastic material using the inmoulding technique, wherein such mould comprises a hollow mould matrix (1) provided with a peripheral border (3) including an annular planar surface (4) lying substantially parallel to a planar surface of the bottom (2) of the hollow mould matrix and joining the latter via an inclined plane (5) having an angle α of anywhere between 10° and 50°, with a difference in level between said two surfaces lying anywhere between 1 mm and 4 mm, said mould matrix having also one or several rounded corners (10), the outside extension radius of which ranges from 10 to 100 mm;
b) providing a label (11) of cast stratified plastic material having a thickness of less than 90 µm and a planar extension such as to enable it to protrude by 0.5 to 2.0 mm from said peripheral border of said hollow mould matrix of said mould;
c) placing said label (11) onto the bottom (3) of said hollow mould matrix (1);
d) holding said label (11) in position on the bottom (3) of said hollow mould matrix (1);
e) closing said hollow mould matrix (1) with a corresponding opposite mould punch (110) to thereby obtain a moulding cavity for forming a plastic lid;
f) injecting a polymer in the fluid state thereof into said moulding cavity so as to fill said cavity and cause the contact surface of said label to fuse therewith in order to obtain a single integral piece, while keeping at the same time said hollow mould matrix and said mould punch at such temperature as to enable the Injected polymer to solidify in the state in which it is bonded to said label.

2. Method according to claim 1, comprising a final step of removing the finished product from the mould and going automatically through the steps a) to f) of the method again.

3. Method according to claim 1 or 2, wherein the step a) comprises providing a mould, whose concave mould matrix (1) is provided with a substantially planar surface of the bottom (2) and a peripheral border (3) having a first annular planar surface (4) extending substantially parallel to the surface defined by the bottom and joining to said bottom surface via an inclined plane (5), the surface of the bottom (2) and the first surface (4) lying on two different planes extending parallel to each other at different levels.

4. Method according to claim 3, wherein the peripheral border (3) also comprises a second surface (6) connecting to said first surface (4) and generally perpendicular thereto, so as to delimit said peripheral border (3) outwards.

5. Method according to claim 4, wherein said second surface (6) includes a first portion (7), which is directly connecting to said first surface (4), and which is followed by a second portion (9) extending with a slightly outward flared pattern.

6. Method according to any of the claims 3 to 5, wherein the inclined plane (5) is oriented towards the peripheral border (3) and the angle of inclination relative to the same bottom lies between 30° and 45°.

7. Method according to any of the claims 3 to 6, wherein the peripheral border (3) comprises four rounded corners (10), whose radius of outside curvature (R) is situated anywhere between 10 and 100 mm.

8. Method according to any of the claims 1 to 7, wherein the step b) is carried out by using a label formed of a stratified polypropylene film in cast form having a thickness situated anywhere between 50 and 90 µm.

9. Method according to any of the claims 1 to 8, wherein the step d) is carried out by applying an electrostatic charge to the label in such manner as to ensure that the label has an electric potential of anywhere between 8 and 30 kilovolt.

10. Method according to any of the claims 1 to 9, wherein the step f) is carried out at an injection temperature lying anywhere between 250° and 320°C, a pressure of less than 175 bar, and during a cycle time of less than one second.

11. Method according to any of the claims 1 to 10, wherein said concave mould matrix comprises a bottom provided with relieves having a height ranging within 1 mm and/or grooves having a radius of curvature greater than 0.5 mm.

12. Method according to claim 11, wherein the grooves are round-shaped blind holes having diameters ranging from 0.5 to 2 mm and delimited by a sharp edge having an interior angle of less than 120°.

13. Mould (100) for carrying out the method according to any of the claims 1 to 12, comprising a concave mould matrix (1) provided with a peripheral border (3) having an annular planar surface (4) extending substantially parallel to a planar surface of the bottom (2) of the matrix and joining to said bottom surface via an inclined plane (5) having an angle (α) situated anywhere between 10° and 50°, with a difference in level between said two surfaces lying anywhere between 1 and 4 mm, said mould matrix having also one or several rounded corners, the outside extension radius of which ranges from 10 to 100 mm.

14. Mould (100) according to claim 13, wherein said bottom (2) is provided with relieves having a height ranging within 1 mm and/or grooves having a radius of curvature greater than 0.5 mm or grooves in the form of round-shaped blind holes having diameters ranging from 0.5 to 2 mm and delimited by a sharp edge having an interior angle of less than 120°.

15. Plastic lid (14) with decorative/informative label (11) obtainable with the method according to any of the claims 1 to 12.

16. Plastic lid (14) with decorative/informative label (11) according to claim 15, comprising grooves and relieves representing details of images, logos, trademarks or relieved details according to a Braille code, according with the claims 11 or 12.

## Patentansprüche

1. Verfahren zur Herstellung eines Plastikdeckels mit einem Etikett, das die folgenden Schritte umfasst:
a) Bereitstellen einer Gussform (100) zur Herstellung eines Deckels aus Kunststoffmaterial unter Verwendung des In-Mould-Verfahrens, wobei eine derartige Gussform eine hohle Gussformmatrix (1) aufweist, die mit einer Umfangskante (3) versehen ist, welche eine ringförmige plane Fläche (4) beinhaltet, die im Wesentlichen parallel zu einer planen Fläche des Bodens (2) der hohlen Gussformmatrix angeordnet ist und mit Letzterer über eine geneigte Ebene (5) verbunden ist, die einen Winkel α zwischen 10° und 50° aufweist, mit einer Niveaudifferenz zwischen den zwei Ebenen zwischen 1 mm und 4 mm, wobei die Gussformmatrix auch eine oder mehrere gerundete Ecken (10) aufweist, deren äußerer Verlaufsradius zwischen 10 bis 100 mm beträgt;
b) Bereitstellen eines Etiketts (11) aus geschichtetem Cast-Kunststoffmaterial, das eine Dicke von weniger als 90 µm und eine solche plane Erstreckung hat, dass ermöglicht wird, dass es um 0,5 bis 2,0 mm von der Umfangskante der hohlen Formmatrix der Gussform übersteht;
c) Plazieren des Etiketts (11) auf dem Boden (3) der hohlen Gussfommatrix (1);
d) Halten des Etiketts (11) in Position auf dem Boden (3) der hohlen Gussformmatrix (1);
e) Schließen der hohlen Gussformmatrix (1) mit einem entsprechenden entgegengesetzten Gussformstempel (110), um dadurch einen Gussformhohlraum zum Ausbilden eines Kunststoffdeckels zu erzielen;
f) Einspritzen eines Polymers in flüssigem Zustand in den Gussformhohlraum, so dass der Hohlraum angefüllt wird und bewirkt wird, dass die Kontaktfläche des Etiketts damit verschmilzt, um ein einziges integrales Stück zu erzielen, und dabei gleichzeitig die hohle Gussformmatrix und den Gussformstempel auf einer solchen Temperatur zu halten, dass ermöglicht wird, dass das injizierte Polymer sich in dem Zustand verfestigt, in welchem es mit dem Etikett verbondet ist.

2. Verfahren nach Anspruch 1, das einen letzten Schritt aufweist, bei dem das fertiggestellte Produkt aus der Gussform entfernt wird und die Schritte a) bis f) des Verfahrens erneut automatisch durchlaufen werden.

3. Verfahren nach Anspruch 1 oder 2, wobei Schritt a) das Bereitstellen einer Gussform umfasst, deren konkave Gussformmatrix (1) mit einer im Wesentlichen planen Fläche des Bodens (2) versehen ist und eine Umfangskante (3) eine erste ringförmige plane Fläche (4) aufweist, die sich im Wesentlichen parallel zu der durch den Boden definierten Fläche erstreckt und mit der Bodenfläche über eine geneigte Ebene (5) verbunden ist, wobei die Fläche des Bodens (2) und die erste Fläche (4) auf zwei unterschiedlichen Ebenen liegen, die sich parallel zueinander auf unterschiedlichen Niveaus erstrecken.

4. Verfahren nach Anspruch 3, wobei die Umfangskante (3) auch eine zweite Fläche (6) aufweist, die mit der ersten Fläche (4) verbunden ist und sich im Wesentlichen senkrecht zu dieser erstreckt, so dass sie die Umfangskante (3) nach außen begrenzt.

5. Verfahren nach Anspruch 4, wobei die zweite Fläche (6) einen ersten Abschnitt (7) beinhaltet, der direkt mit der ersten Fläche (4) verbunden ist, und der von einem zweiten Abschnitt (9) gefolgt ist, der sich mit geringfügig nach außen aufgeweitetem Muster erstreckt.

6. Verfahren nach einem der Ansprüche 3 bis 5, wobei die geneigte Ebene (5) hin zur Umfangskante (3) ausgerichtet ist und der Neigungswinkel bezüglich dem Boden zwischen 30° und 45° liegt.

7. Verfahren nach einem der Ansprüche 3 bis 6, wobei die Umfangskante (3) vier gerundete Ecken (10) aufweist, deren äußerer Krümmungsradius (R) zwischen 10 und 100 mm liegt.

8. Verfahren nach einem der Ansprüche 1 bis 7, wobei der Schritt b) unter Verwendung eines Etiketts ausgeführt wird, das aus einem geschichteten Polypropylenfilm in Cast-Form ausgebildet ist, dessen Dicke zwischen 50 und 90 µm beträgt.

9. Verfahren nach einem der Ansprüche 1 bis 8, wobei der Schritt d) derart ausgeführt wird, dass eine elektrostatische Ladung an das Etikett angelegt wird, derart, dass gewährleistet wird, dass das Etikett ein elektrisches Potenzial zwischen 8 und 30 kV hat.

10. Verfahren nach einem der Ansprüche 1 bis 9, wobei der Schritt f) bei einer Einspritztemperatur zwischen 250° und 320 °C, einem Druck von weniger als 175 bar, und während einer Zykluszeit von weniger als 1 Sekunde ausgeführt wird.

11. Verfahren nach einem der Ansprüche 1 bis 10, wobei die konkave Gussformmatrix einen Boden aufweist, der mit Vorsprüngen, deren Höhe innerhalb 1 mm beträgt, und/oder Nuten versehen ist, deren Krümmungsradius größer als 0,5 mm ist.

12. Verfahren nach Anspruch 11, wobei die Nuten runde Gestalt aufweisende Sacklöcher sind, deren Durchmesser zwischen 0,5 bis 2 mm betragen und die durch eine scharfe Kante begrenzt sind, deren Innenwinkel weniger als 120° beträgt,

13. Gussform (100) zur Ausführung des Verfahrens nach einem der Ansprüche 1 bis 12, aufweisend eine konkave Gussformmatrix (1), die mit einer Umfangskante (3) versehen ist, welche eine ringförmige plane Fläche (4) beinhaltet, die sich im Wesentlichen parallel zu einer planen Fläche des Bodens (2) der Matrix erstreckt und mit der Bodenfläche über eine geneigte Ebene (5) verbunden ist, welche einen Winkel α zwischen 10° und 50° aufweist, mit einer Niveaudifferenz zwischen den zwei Ebenen zwischen 1 mm und 4 mm, wobei die Gussformmatrix auch eine oder mehrere gerundete Ecken aufweist, deren äußerer Verlaufsradius zwischen 10 bis 100 mm beträgt.

14. Gussform (100) nach Anspruch 13, wobei der Boden (2) versehen ist mit Vorsprüngen, deren Höhe innerhalb 1 mm beträgt, und/oder Nuten, deren Krümmungsradius größer als 0,5 mm ist, oder Nuten in Form von runde Gestalt aufweisenden Sacklöchern, deren Durchmesser zwischen 0,5 bis 2 mm betragen und die durch eine scharfe Kante begrenzt sind, deren Innenwinkel weniger als 120° beträgt.

15. Kunststoffdeckel (14) mit Dekor-/Informationsetikett (11), der mit dem Verfahren nach einem der Ansprüche 1 bis 12 erzielt werden kann.

16. Kunststoffdeckel (14) mit Dekor-/Informationsetikett (11) nach Anspruch 15, der Nuten und Vorsprüngen aufweist, die Details von Bildern, Logos, Handelsmarken oder vorspringende Details gemäß einem Braille-Code repräsentieren, gemäß den Ansprüchen 11 oder 12.

## Revendications

1. Procédé de production d'un couvercle en plastique avec une étiquette, comprenant les étapes de :
a) fourniture d'un moule (100) pour la production d'un couvercle en matériau plastique en utilisant la technique du « inmoulding », dans lequel un tel moule comprend une matrice de moule creuse (1) dotée d'une bordure périphérique (3) comprenant une surface plane annulaire (4) s'étendant sensiblement parallèle à une surface plane du fond (2) de la matrice de moule creuse et reliée à cette dernière via un plan incliné (5) ayant un angle α situé n'importe où entre 10° et 50°, avec une différence de niveau entre lesdites deux surfaces se trouvant n'importe où entre 1 mm et 4 mm, ladite matrice de moule ayant également un ou plusieurs coins arrondis (10), dont le rayon d'extension extérieur va de 10 à 100 mm ;
b) fourniture d'une étiquette (11) de matériau plastique stratifié ayant une épaisseur de moins de 90 µm et une extension plane de façon à lui permettre de faire saillie de 0,5 à 2,0 mm à partir de ladite bordure périphérique de ladite matrice de moule creuse dudit moule ;
c) placement de ladite étiquette (11) sur le fond (3) de ladite matrice de moule creuse (1) ;
d) maintien de ladite étiquette (11) en position sur le fond (3) de ladite matrice de moule creuse (1) ;
e) fermeture de ladite matrice de moule creuse (1) avec un poinçon de moule opposé correspondant (110) afin d'obtenir ainsi une cavité de moulage pour former un couvercle en plastique ;
f) injection d'un polymère dans son état fluide dans ladite cavité de moulage de façon à remplir ladite cavité de moulage et amener la surface de contact de ladite étiquette à fusionner avec cette dernière afin d'obtenir une seule pièce d'un seul tenant, tout en maintenant au même moment ladite matrice de moule creuse et ledit poinçon de moule à une température telle qu'elle permet au polymère injecté de se solidifier dans l'état dans lequel il est lié à ladite étiquette.

2. Procédé selon la revendication 1, comprenant une étape finale de retrait du produit fini du moule et de passage automatique par les étapes a) à f) du procédé à nouveau.

3. Procédé selon la revendication 1 ou 2, dans lequel l'étape a) comprend la fourniture d'un moule, dont la matrice de moule concave (1) est dotée d'une surface sensiblement plane du fond (2) et d'une bordure périphérique (3) ayant une première surface plane annulaire (4) s'étendant sensiblement parallèle à la surface définie par le fond et reliée à ladite surface de fond via un plan incliné (5), la surface du fond (2) et la première surface (4) s'étendant sur deux plans différents s'étendant parallèles l'un à l'autre à différents niveaux.

4. Procédé selon la revendication 3, dans lequel la bordure périphérique (3) comprend également une seconde surface (6) raccordée à ladite première surface (4) et généralement perpendiculaire à cette dernière, de façon à délimiter ladite bordure périphérique (3) vers l'extérieur.

5. Procédé selon la revendication 4, dans lequel ladite seconde surface (6) comprend une première portion (7), qui est directement raccordée à ladite première surface (4), et qui est suivie par une seconde portion (9) s'étendant avec un motif légèrement évasé vers l'extérieur.

6. Procédé selon l'une quelconque des revendications 3 à 5, dans lequel le plan incliné (5) est orienté vers la bordure périphérique (3) et l'angle d'inclinaison par rapport au même fond est entre 30° et 45°.

7. Procédé selon l'une quelconque des revendications 3 à 6, dans lequel la bordure périphérique (3) comprend quatre coins arrondis (10), dont le rayon de courbure extérieur (R) est situé n'importe où entre 10 et 100 mm.

8. Procédé selon l'une quelconque des revendications 1 à 7, dans lequel l'étape b) est réalisée en utilisant une étiquette formée d'un film de polypropylène stratifié sous forme coulée ayant une épaisseur située n'importe où entre 50 et 90 µm.

9. Procédé selon l'une quelconque des revendications 1 à 8, dans lequel l'étape b) est réalisée en appliquant une charge électrostatique à l'étiquette d'une façon telle qu'elle garantit que l'étiquette a un potentiel électrique n'importe où entre 8 et 30 kilovolts.

10. Procédé selon l'une quelconque des revendications 1 à 9, dans lequel l'étape f) est réalisée à une température d'injection se trouvant n'importe où entre 250 et 320 °C, une pression de moins de 175 bar, et pendant un temps de cycle de moins d'une seconde.

11. Procédé selon l'une quelconque des revendications 1 à 10, dans lequel ladite matrice de moule concave comprend un fond doté de reliefs ayant une hauteur ne dépassant pas 1 mm et/ou des rainures ayant un rayon de courbure supérieur à 0,5 mm.

12. Procédé selon la revendication 11, dans lequel les rainures sont des trous borgnes de forme arrondie ayant des diamètres allant de 0, à 2 mm et délimités par un bord vif ayant un angle intérieur de moins de 120°.

13. Moule (100) permettant de réaliser le procédé selon l'une quelconque des revendications 1 à 12, comprenant une matrice de moule concave (1) dotée d'une bordure périphérique (3) ayant une surface plane annulaire (4) s'étendant sensiblement parallèle à une surface plane du fond (2) de la matrice et reliée à ladite surface de fond via un plan incliné (5) ayant un angle α situé n'importe où entre 10° et 50°, avec une différence de niveau entre lesdites deux surfaces se trouvant n'importe où entre 1 mm et 4 mm, ladite matrice de moule ayant également un ou plusieurs coins arrondis, dont le rayon d'extension extérieur va de 10 à 100 mm.

14. Moule (100) selon la revendication 13, dans lequel ledit fond (2) est doté de reliefs ayant une hauteur ne dépassant pas 1 mm et/ou des rainures ayant un rayon de courbure supérieur à 0,5 mm ou des rainures sous la forme de trous borgnes de forme arrondie ayant des diamètres allant de 0,5 à 2 mm et délimités par un bord vif ayant un angle intérieur de moins de 120°.

15. Couvercle en plastique (14) avec une étiquette décorative/informative (11) pouvant être obtenu grâce au procédé selon l'une quelconque des revendications 1 à 12.

16. Couvercle en plastique (14) avec une étiquette décorative/informative (11) selon la revendication 15, comprenant des rainures et des reliefs présentant les détails d'images, de logos, de marques déposées ou des détails en relief selon un code Braille, en conformité avec les revendications 11 ou 12.
